# EUROPEAN PATENT SPECIFICATION

(11) **EP 2 688 761 B1**
(45) Date of publication and mention of the grant of the patent: **16.12.2015**
(21) Application number: 12713487.2
(22) Date of filing: 21.03.2012
(51) Int. Cl.: B60K 6/12, F16H 61/4096

(54) **ACCUMULATOR ASSISTED HYDROSTATIC DRIVELINE AND OPTIMIZATION METHOD THEREOF**
AKKUMULATORGESTÜTZTER HYDROSTATISCHER ANTRIEBSSTRANG UND OPTIMIERUNGSVERFAHREN DAFÜR
CHAÎNE CINÉMATIQUE HYDROSTATIQUE ASSISTÉE PAR ACCUMULATEUR ET SON PROCÉDÉ D'OPTIMISATION

(30) Priority: 21.03.2011 US 201161454719 P
(43) Date of publication of application: 29.01.2014
(73) Proprietor: Dana Belgium N.V., 8200 Brugge (BE)
(72) Inventor: WESOLOWSKI, Steven, J., Waterville OH 43566 (US); MORSCHECK, Timothy, J., Portage MI 49024 (US); REMBOSKI, Donald, J., Ann Arbor MI 48105 (US); VERSTEYHE, Mark, R.J., B-8020 Oostkamp (BE); VAN DOORSSELAERE, Veerle, M.J., B-9000 Gent (BE); DE BEER, Bart, B-8310 Brugge (BE); MEERTENS, Bruno, B-8210 Loppen (BE); DUTRE, Mathieu, P.E., B-9100 Sint-Niklaas (BE)
(74) Representative: Pfenning, Meinig & Partner GbR
(86) International application number: PCT/US2012/029858
(87) International publication number: WO 2012/129253

(56) References cited:
- WO-A1-88/03123
- WO-A1-2007/071362
- WO-A1-2008/033378
- DE-A1-102008 021 889

## Description

### FIELD OF THE INVENTION

The present invention relates to hydrostatic drivelines including accumulators and methods for optimizing the operation thereof.

### BACKGROUND

Vehicles incorporating a conventional hydrostatic driveline have many benefits over vehicles having a conventional driveline. Such vehicles having the conventional hydrostatic driveline may be well suited for tasks such as pushing loads, lifting loads, or digging, for example. The conventional hydrostatic driveline may provide the vehicle with a high torque output, excellent response to input from an operator, and the ability to power actuators and equipment that may be attached to the vehicle. However, the conventional hydrostatic driveline may result in the vehicle being inefficient, restricted to a narrow speed range, and including specialized, expensive components.

Typically, the conventional hydrostatic driveline is driven by an internal combustion engine. The internal combustion engine is selected to accommodate a peak power demand of the vehicle. Accordingly, the internal combustion engine is oversized for a majority of tasks required of the vehicle, such as moving when the vehicle is in an unloaded state or light tasks. Losses may also be incurred in the conventional hydrostatic driveline itself, through inefficiencies that may be present in hydraulic pumps or other components. Because the internal combustion engine is typically oversized and losses are

typically present in the conventional hydrostatic driveline, an efficiency of the vehicle may be compromised.

The high torque output that accompanies the conventional hydrostatic driveline may restrict the vehicle to the narrow speed range. The narrow speed range may be advantageous for the specialized tasks the conventional hydrostatic driveline is well suited for, but such a speed range may severely restrict the vehicle. Traversing long distances for the vehicle may limit productivity and result in dissatisfaction of the operator.

The conventional hydrostatic driveline may include specialized, expensive components, such as large hydraulic pumps, motors, and valving systems manufactured in small quantities. Inclusion of such components in the conventional hydrostatic driveline may greatly increase an initial cost of the vehicle. Further and as a result, a service cost associated with the vehicle may increase greatly. The conventional hydrostatic driveline including specialized, expensive components may greatly increase purchase and maintenance costs of the vehicle.

DE 10 2008 021 889 A discloses a hydrostatic driveline for a vehicle, comprising a power source, a drive axle, a first fluid accumulator, a second fluid accumulator, an auxiliary circuit including a fist pump drivingly engaged with the power source, and a drive circuit. The drive circuit includes a second pump drivingly engaged with the power source, a motor drivingly engaged with the drive axle, and a directional valve. The second pump is in fluid communication with the directional valve, the directional valve is in fluid communication with the first fluid accumulator and the second accumulator. The directional valve may be selectively controlled to direct fluid from the second pump and the motor to the first fluid accumulator and the second fluid accumulator.

It would be advantageous to develop a hydrostatic driveline for a vehicle that is efficient, may be operated at a wide range of speeds, and is comprised of components which are easily procured and serviced.

### SUMMARY OF THE INVENTION

Presently provided by the invention, a hydrostatic driveline for a vehicle that is efficient, may be operated at a wide range of speeds, and is comprised of components which are easily procured and serviced, has surprisingly been discovered.

The invention is defined in the independent claims. Preferred embodiments thereof are defined in the dependent claims.

In one embodiment, the present invention is directed to a hydrostatic driveline for a vehicle. The hydrostatic driveline includes a power source, a drive axle, a first fluid accumulator, a second fluid accumulator, an auxiliary circuit including a first pump drivingly engaged with the power source, and a drive circuit including a second pump drivingly engaged with the power source, a motor drivingly engaged with the drive axle, and a directional valve. The second pump is in fluid communication with the directional valve and the directional valve in fluid communication with the first fluid accumulator and the second fluid accumulator. The directional valve may be selectively controlled to direct fluid from the second pump and the motor to the first fluid accumulator and the second fluid accumulator.

In a second embodiment, the present invention is directed to a method for minimizing a fuel consumption rate of a vehicle having a hydrostatic driveline. The method comprising the steps of providing a variable displacement motor, determining an efficiency of the variable displacement motor, providing a variable displacement pump, determining an efficiency of the variable displacement pump, providing a power source, a capacity of the power source based on a desired power output of the vehicle, an efficiency of the variable displacement motor, and an efficiency of the variable displacement pump, providing a controller, and controlling a fluid displacement and an output pressure of the motor independent of a fluid displacement of the pump with the controller. The controller employs the efficiency of the motor and the efficiency of the pump to minimize the fuel consumption rate of the vehicle.

In a third embodiment, the present invention is directed to a method for determining an optimal state of charge control function for a hydrostatic accumulator and employing a control system to adjust a state of charge of the hydrostatic accumulator to track the optimal state of charge function. The method comprises the steps of providing a hydrostatic driveline for a vehicle including a power source, a pump drivingly engaged with the power source, a motor, and the hydrostatic accumulator, and the pump, the motor, and the hydrostatic accumulator forming a portion of a fluidic circuit, providing a controller in communication with a plurality of inputs, calculating the optimal state of charge control function with the controller, calculating an optimal state of charge of the hydrostatic accumulator using the optimal state of charge function and at least a portion of the plurality of inputs, comparing the state of charge of the hydrostatic accumulator to the optimal state of charge as calculated using the optimal state of charge control function to determine a state of charge error, calculating a corrective value for the state of charge using the state of charge error, and the at least a portion of the plurality of inputs, and adjusting a state of charge of the hydrostatic accumulator based on the corrective value and the state of charge error, the state of charge of the hydrostatic accumulator adjusted by charging the hydrostatic accumulator using one of the pump and the motor or discharging the hydrostatic accumulator.

Various aspects of this invention will become apparent to those skilled in the art from the following detailed description of the preferred embodiment, when read in light of the accompanying drawings.

### BRIEF DESCRIPTION OF THE DRAWINGS

The above, as well as other advantages of the present invention, will become readily apparent to those skilled in the art from the following detailed description when considered in the light of the accompanying drawings in which:
FIG. 1 is a schematic view of a hydrostatic driveline for a vehicle;
FIG. 2 is a schematic view of another hydrostatic driveline for a vehicle;
FIG. 3 is a schematic view of another hydrostatic driveline for a vehicle;
FIG. 4 is a schematic view of another hydrostatic driveline for a vehicle;
FIG. 5 is a schematic view of another hydrostatic driveline for a vehicle;
FIG. 6 is a schematic view of another hydrostatic driveline for a vehicle;
FIG. 7 is a schematic view of another hydrostatic driveline for a vehicle;
FIG. 8 is a schematic view of a hydrostatic driveline for a vehicle according to an embodiment of the present invention;
FIG. 9 is a diagram illustrating the process of determining the position of a swashplate for a variable displacement pump;
FIG. 10 is a chart illustrating an example of an optimal state of charge function, a first instantaneous state of charge of the accumulators, a second instantaneous state of charge of the accumulators, and a calculated state of charge error for the first instantaneous state of charge and the second instantaneous state of charge; and
FIG. 11 is a chart illustrating an example of an optimal state of charge function and three examples of corrective values which may be assigned to a response action.

### DETAILED DESCRIPTION OF THE PREFERRED EMBODIMENTS

It is to be understood that the specific devices and processes illustrated in the attached drawings, and described in the following specification are simply exemplary embodiments of the inventive concepts defined herein. Hence, specific dimensions, directions or other physical characteristics relating to the embodiments disclosed are not to be considered as limiting, unless expressly stated otherwise.

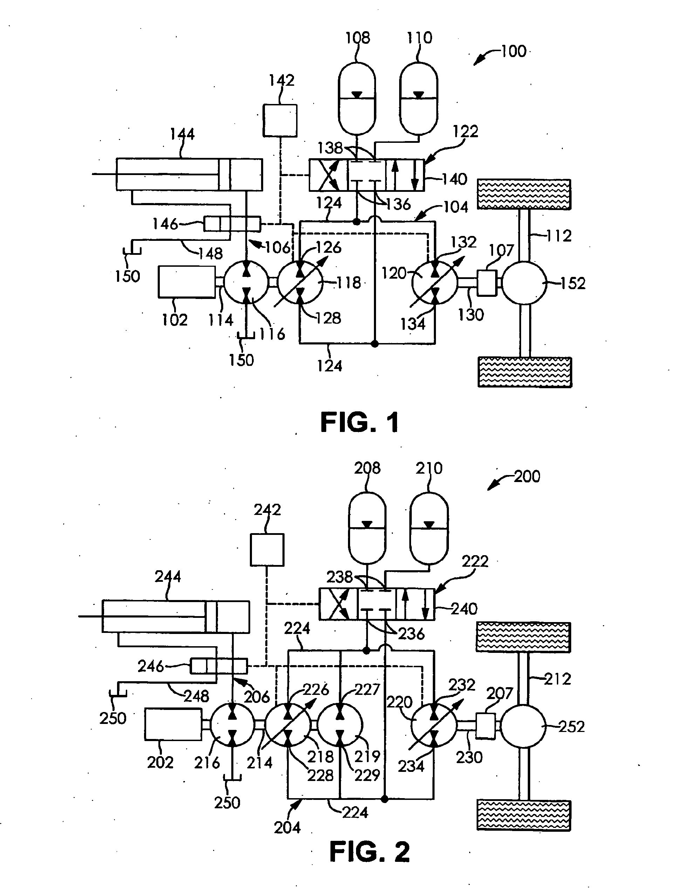

FIG. 1 illustrates a hydrostatic driveline 100. The hydrostatic driveline 100 includes a power source 102, a drive circuit 104, an auxiliary circuit 106, a transmission 107, a first fluid accumulator 108, a second fluid accumulator 110, and a drive axle 112. The hydrostatic driveline 100 forms a portion of a vehicle (not shown); however, the hydrostatic driveline 100 may be used in other applications. The power source 102 and the drive axle 112 are drivingly engaged with the drive circuit 104. Further, the power source 102 is drivingly engaged with the auxiliary circuit 106. The first fluid accumulator 108 and the second fluid accumulator 110 are in fluid communication with the drive circuit 104.

The power source 102 is an internal combustion engine as is known in the art. However, it is understood the power source 102 may be another type of power source such as an electric motor, for example. The power source 102 rotates a first drive shaft 114. The first drive shaft 114 is drivingly engaged with a fixed displacement pump 116 of the auxiliary circuit 106 and a variable displacement pump 118 of the drive circuit 104. A transmission (not shown) or a clutching device (not shown) may be disposed on the first drive shaft 114 to permit selective engagement of the power source 102 with one or both of the fixed displacement pump 116 and the variable displacement pump 118. Further, the transmission or the clutching device may be used to modify a characteristic of a power transferred from the power source 102 to the auxiliary circuit 106 and the drive circuit 104.

The drive circuit 104 comprises the variable displacement pump 118, a variable displacement motor 120, a directional valve 122, and a plurality of drive fluid conduits 124. It is understood that the terms fixed displacement pump and fixed displacement motor describe a fluid power device that may be operated as either a pump or a motor, depending on an input power provided thereto. Further, it is also understood that the terms variable displacement pump and variable displacement motor describe a fluid power device that may be operated as either a pump or a motor, depending on an input power provided thereto.

The variable displacement pump 118 is a hydraulic axial piston pump having a movable swashplate (not shown). However, it is understood the variable displacement pump 118 may be any other type of variable displacement pump 118. The variable displacement pump 118 is drivingly engaged with the power source 102 through the first drive shaft 114. A first fluid port 126 of the variable displacement pump 118 is in fluid communication with a first portion of the plurality of drive fluid conduits 124. A second fluid port

128 of the variable displacement pump 118 is in fluid communication with a second portion of the plurality of drive fluid conduits 124.

The variable displacement motor 120 is a hydraulic axial piston motor having a movable swashplate (not shown). However, it is understood the variable displacement motor 120 may be any other type of variable displacement motor. The variable displacement motor 120 is drivingly engaged with the drive axle 112 through a second drive shaft 130. A first fluid port 132 of the variable displacement motor 120 is in fluid communication with the first portion of the plurality of drive fluid conduits 124. A second fluid port 134 of the variable displacement motor 120 is in fluid communication with the second portion of the plurality of drive fluid conduits 124.

The directional valve 122 is a three position, four way directional valve as is known in the art; however, it is understood the directional valve 122 may be any other fluid control valve. The directional valve 122 includes two circuit ports 136, two accumulator ports 138, and a sliding spool 140. The directional valve is in fluid communication with the first portion of the plurality of drive fluid conduits 124, the second portion of the plurality of drive fluid conduits 124, the first fluid accumulator 108, and the second fluid accumulator 110. A controller 142 in communication with the directional valve 122 is used to change a position of the directional valve 122.

The plurality of drive fluid conduits 124 are conduits used in hydraulic power systems as is known in the art. The plurality of drive fluid conduits 124 may comprise flexible conduits, rigid conduits, or conduits formed within other components of the hydrostatic driveline 100. The plurality of drive fluid conduits 124 includes the first portion of the plurality of drive fluid conduits 124 and the second portion of the plurality of drive fluid conduits 124. The first portion of the plurality of drive fluid conduits 124 is in fluid communication with the variable displacement pump 118 through the first fluid port 126 thereof, the variable displacement motor 120 through the first fluid port 132 thereof, and one of the circuit ports 136 of the directional valve 122. The second portion of the plurality of drive fluid conduits 124 is in fluid communication with the variable displacement pump 118 through the second fluid port 128 thereof, the variable displacement motor 120 through the second fluid port thereof 134, and the remaining circuit port 136 of the directional valve 122.

The auxiliary circuit 106 comprises the fixed displacement pump 116, an actuator 144, an auxiliary directional valve 146, and a plurality of auxiliary fluid conduits 148.

The fixed displacement pump 116 may be a gear pump, a screw pump, a rotary vane pump, or any other type of fixed displacement pump. Further, it is understood that a variable displacement pump may be used instead of the fixed displacement pump 116. When the variable displacement pump is used instead of the fixed displacement pump, the variable displacement pump is a hydraulic axial piston pump having a movable swashplate. However, it is understood the variable displacement pump may be any other type of variable displacement pump. The fixed displacement pump 116 is drivingly engaged with the power source 102 through the first drive shaft 114. The fixed displacement pump 116 is in fluid communication with the auxiliary directional valve 146 and a fluid reservoir 150.

The actuator 144 is a hydraulic cylinder; however, it is understood that the actuator 144 may be a plurality of hydraulic cylinders, a hydraulic motor, or any other device powered by a pressurized fluid. The actuator 144 is in fluid communication with the auxiliary directional valve 146. Typically, the actuator 144 engages a movable portion of the vehicle to facilitate the movement of a load. However, it is understood that the actuator 144 may be used in other ways.

The auxiliary directional valve 146 is a three position, four way directional valve as is known in the art; however, it is understood the directional valve 146 may be any other fluid control valve. The auxiliary directional valve 146 is in fluid communication with the fixed displacement pump 116, the actuator 144, and the fluid reservoir 150. The controller 142 in communication with the auxiliary directional valve 146 is used to change a position of the auxiliary directional valve 146.

The plurality of auxiliary fluid conduits 148 are conduits used in hydraulic power systems as is known in the art. The plurality of auxiliary fluid conduits 148 may comprise flexible conduits, rigid conduits, or conduits formed within other components of the hydrostatic driveline 100. The plurality of auxiliary fluid conduits 148 enables the auxiliary directional valve 146 to communicate with the fluid reservoir 150, the fixed displacement pump 116, and the actuator 144.

The transmission 107 is drivingly disposed between the second drive shaft 130 and the differential 152 to modify a characteristic of the power transferred from the variable displacement motor 120 to the drive axle 112. The transmission 107 may be one of an automatic transmission, a manual transmission, and a continuously variable transmission and is used to increase a drive ratio range of the hydrostatic driveline 100. Further, it is understood that hydrostatic driveline 100 may not include the transmission 107.

The first fluid accumulator 108 is an accumulator as is known in the art. The first fluid accumulator 108 is a hollow vessel in fluid communication with one of the accumulator ports 138 of the directional valve 122. A quantity of gas within the first fluid accumulator 108 is compressed when hydraulic fluid enters the first fluid accumulator 108. The first fluid accumulator 108 may be configured for operation within a particular pressure range. While not shown, the first fluid accumulator 108 may also be fitted with a flush valve (for draining the first fluid accumulator 108 to the fluid reservoir 150), a pressure relief valve (for draining the first fluid accumulator 108 to the fluid reservoir 150), a proportional valve (for cooperating with the directional valve 122 for fluidly connecting the first fluid accumulator 150 to the drive circuit 104), and a pilot valve (for providing fluid pressure to the directional valve 122). The controller 142 in communication with the flush valve, the proportional valve, and the pilot valve is used to change a position of the flush valve, the proportional valve, and the pilot valve.

The second fluid accumulator 110 is an accumulator as is known in the art. The second fluid accumulator 110 is a hollow vessel in fluid communication with a remaining accumulator port 138 of the directional valve 122. A quantity of gas within the second fluid accumulator 110 is compressed when hydraulic fluid enters the second fluid accumulator 110. The second fluid accumulator 110 may be configured for operation within a particular pressure range. While not shown, the second fluid accumulator 110 may also be fitted with a flush valve (for draining the second fluid accumulator 110 to the fluid reservoir 150), a pressure relief valve (for draining the second fluid accumulator 110 to the fluid reservoir 150), a proportional valve (for cooperating with the directional valve 122 for fluidly connecting the first fluid accumulator 150 to the drive circuit 104), and a pilot valve (for providing fluid pressure to the directional valve 122). The controller 142 in communication with the flush valve, the proportional valve, and the pilot valve is used to change a position of the flush valve, the proportional valve, and the pilot valve.

The drive axle 112 is a shaft driven axle as is known in the art. The drive axle 112 is drivingly engaged with the variable displacement motor through the second drive shaft 130 and a differential 152; however, it is understood the variable displacement motor may directly drive the differential 152 or an axle of the vehicle the drive axle 112 is incorporated in.

FIG. 2 shows a portion of an alternative embodiment of the hydrostatic driveline 100. A hydrostatic driveline 200 shown in FIG. 2 includes a power source 202, a drive circuit 204, an auxiliary circuit 206, a transmission 207, a first fluid accumulator 208, a second fluid accumulator 210, and a drive axle 212. Similar structural features of the hydrostatic driveline 100 are similarly referenced, with the exception of the below identified features.

The drive circuit 204 comprises a first fixed displacement pump 216, a variable displacement pump 218, a second fixed displacement pump 219, a variable displacement motor 220, a directional valve 222, and a plurality of drive fluid conduits 224. The variable displacement pump 218 and the second fixed displacement pump 219 cooperate to pump a variable amount of hydraulic fluid within a predetermined range through the drive circuit 204.

The second fixed displacement pump 219 of the drive circuit 204 may be a gear pump, a screw pump, a rotary vane pump, or any other type of fixed displacement pump. The second fixed displacement pump 219 is drivingly engaged with the power source 202 through a first drive shaft 214. A first fluid port 227 of the second fixed displacement pump 219 is in fluid communication with a first portion of the plurality of drive fluid conduits 224. A second fluid port 229 of the second fixed displacement pump 219 is in fluid communication with a second portion of the plurality of drive fluid conduits 224.

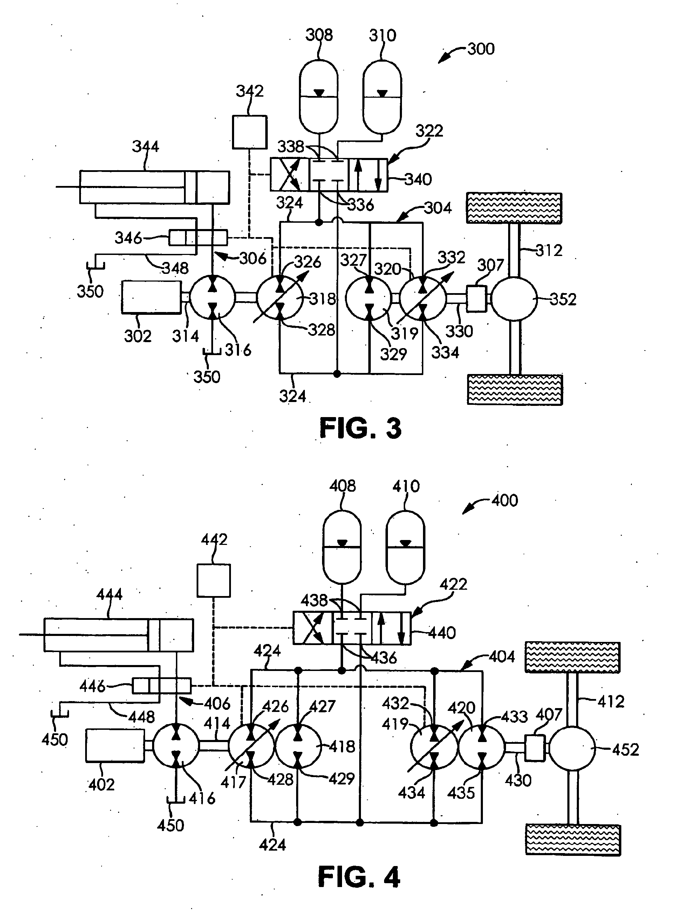

FIG. 3 shows a portion of an alternative embodiment of the hydrostatic driveline 100. A hydrostatic driveline 300 shown in FIG. 3 includes a power source 302, a drive circuit 304, an auxiliary circuit 306, a transmission 307, a first fluid accumulator 308, a second fluid accumulator 310, and a drive axle 312. Similar structural features of the hydrostatic driveline 100 are similarly referenced, with the exception of the below identified features.

The drive circuit 304 comprises a variable displacement pump 318, a fixed displacement motor 319, a variable displacement motor 320, a directional valve 322, and a plurality of drive fluid conduits 324. The fixed displacement motor 319 and the variable displacement motor 320 cooperate to pump a variable amount of hydraulic fluid within a predetermined range to drive the drive axle 312.

The fixed displacement motor 319 of the drive circuit 304 may be a gear motor, a screw motor, a rotary vane motor, or any other type of fixed displacement motor. The fixed displacement motor 319 is drivingly engaged with the drive axle 312 through a second drive shaft 330. A first fluid port 327 of the fixed displacement motor 319 is in fluid communication with a first portion of the plurality of drive fluid conduits 324. A second fluid port 329 of the fixed displacement motor 319 is in fluid communication with a second portion of the plurality of drive fluid conduits 324.

FIG. 4 shows a portion of an alternative embodiment of the hydrostatic driveline 100. The hydrostatic driveline 400 shown in FIG. 4 includes a power source 402, a drive circuit 404, an auxiliary circuit 406, a transmission 407, a first fluid accumulator 408, a second fluid accumulator 410, and a drive axle 412. Similar structural features of the hydrostatic driveline 100 are similarly referenced, with the exception of the below identified features.

The drive circuit 404 comprises a variable displacement pump 417, a second fixed displacement pump 418, a variable displacement motor 419, a fixed displacement motor 420, a directional valve 422, and a plurality of drive fluid conduits 424. The variable displacement pump 417 and the second fixed displacement pump 418 cooperate to pump a variable amount of hydraulic fluid within a predetermined range through the drive circuit 404. The variable displacement motor 419 and the fixed displacement motor 420 cooperate to pump a variable amount of hydraulic fluid within a predetermined range through the drive circuit 404.

The second fixed displacement pump 418 of the drive circuit 404 may be a gear pump, a screw pump, a rotary vane pump, or any other type of fixed displacement pump. The second fixed displacement pump 418 is drivingly engaged with the power source 402 through a first drive shaft 414. A first fluid port 427 of the second fixed displacement pump 418 is in fluid communication with a first portion of the plurality of drive fluid conduits 424. A second fluid port 429 of the second fixed displacement pump 418 is in fluid communication with a second portion of the plurality of drive fluid conduits 424.

The fixed displacement motor 420 of the drive circuit 404 may be a gear motor, a screw motor, a rotary vane motor, or any other type of fixed displacement motor 420. The fixed displacement motor 420 is drivingly engaged with the drive axle 412 through a second drive shaft 430. A first fluid port 433 of the fixed displacement motor 420 is in fluid communication with a first portion of the plurality of drive fluid conduits 424. A second fluid port 435 of the fixed displacement motor 420 is in fluid communication with a second portion of the plurality of drive fluid conduits 424.

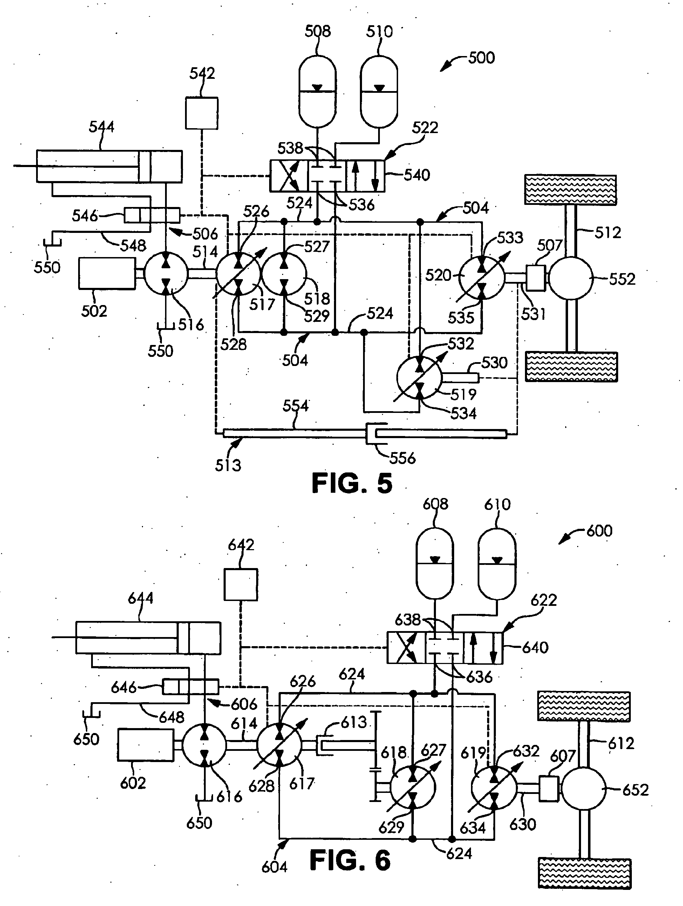

FIG. 5 shows a portion of an alternative embodiment of the hydrostatic driveline 100. A hydrostatic driveline 500 shown in FIG. 5 includes a power source 502, a drive circuit 504, an auxiliary circuit 506, a transmission 507, a first fluid accumulator 508, a second fluid accumulator 510, a drive axle 512, and a direct drive mechanism 513. Similar structural features of the hydrostatic driveline 100 are similarly referenced, with the exception of the below identified features.

The drive circuit 504 comprises a variable displacement pump 517, a second fixed displacement pump 518, a first variable displacement motor 519, a second variable displacement motor 520, a directional valve 522, and a plurality of drive fluid conduits 524. The variable displacement pump 517 and the second fixed displacement pump 518 cooperate to pump a variable amount of hydraulic fluid within a predetermined range through the drive circuit 504. The first variable displacement motor 519 and the second variable displacement motor 520 cooperate to pump a variable amount of hydraulic fluid within a predetermined range through the drive circuit 504.

The second fixed displacement pump 518 of the drive circuit 504 may be a gear pump, a screw pump, a rotary vane pump, or any other type of fixed displacement pump. The second fixed displacement pump 518 is drivingly engaged with the power source 502 through a first drive shaft 514. A first fluid port 527 of the second fixed displacement pump 518 is in fluid communication with a first portion of the plurality of drive fluid conduits 524. A second fluid port 529 of the second fixed displacement pump 518 is in fluid communication with a second portion of the plurality of drive fluid conduits 524.

The first variable displacement motor 519 is a hydraulic axial piston motor having a movable swashplate. However, it is understood the first variable displacement motor 519 may be any other type of variable displacement motor. The first variable displacement motor 519 is drivingly engaged with the drive axle 512 through a second drive shaft 530. A first fluid port 532 of the first variable displacement motor 519 is in fluid communication with the first portion of the plurality of drive fluid conduits 524. A second fluid port 534 of the first variable displacement motor 519 is in fluid communication with the second portion of the plurality of drive fluid conduits 524.

The second variable displacement motor 520 is a hydraulic axial piston motor having a movable swashplate. However, it is understood the second variable displacement motor 520 may be any other type of variable displacement motor. The second variable displacement motor 520 is drivingly engaged with the drive axle 512 through a third drive shaft 531; however, it is understood that the first variable displacement motor 519 and the second variable displacement motor 520 may share a drive shaft. A first fluid port 533 of the second variable displacement motor 520 is in fluid communication with a first portion of the plurality of drive fluid conduits 524. A second fluid port 535 of the second variable displacement motor 520 is in fluid communication with a second portion of the plurality of drive fluid conduits 524.

The direct drive mechanism 513 comprises at least one drive member 554 that permits selective and direct drive engagement between the first drive shaft 514 and the drive axle 512. As shown, a portion of the direct drive mechanism 513 is illustrated schematically; however, it is understood the direct drive mechanism 513 may comprise a plurality of gears, a plurality of rigid members, a plurality of kinematic joints, and at least one clutching device 556. As shown, the clutching device 556 is illustrated schematically; however, it is understood the clutching device 556 may be a dry or wet disk style clutch, a dog clutch, or any other type of clutch. A controller 542 in communication with the clutching device 556 is used to selectively engage the first drive shaft 514 with the drive axle 512.

FIG. 6 shows a portion of an alternative embodiment of the hydrostatic driveline 100. A hydrostatic driveline 600 shown in FIG. 6 includes a power source 602, a drive circuit 604, an auxiliary circuit 606, a transmission 607, a first fluid accumulator 608, a second fluid accumulator 610, a drive axle 612, and an inter-pump clutching device 613. Similar structural features of the hydrostatic driveline 100 are similarly referenced, with the exception of the below identified features.

The drive circuit 604 comprises a variable displacement pump 617, a second fixed displacement pump 618, a variable displacement motor 619, a directional valve 622, and a plurality of drive fluid conduits 624. The variable displacement pump 617 and the second fixed displacement pump 618 cooperate to pump a variable amount of hydraulic fluid within a predetermined range through the drive circuit 604.

The second fixed displacement pump 618 of the drive circuit 604 may be a gear pump, a screw pump, a rotary vane pump, or any other type of fixed displacement pump. The second fixed displacement pump 618 is drivingly engaged with the power source 602 through the first drive shaft 614 and the inter-pump clutching device 613. A first fluid port 627 of the second fixed displacement pump 618 is in fluid communication with a first portion of the plurality of drive fluid conduits 624. A second fluid port 629 of the second fixed displacement pump 618 is in fluid communication with a second portion of the plurality of drive fluid conduits 624.

The inter-pump clutching device 613 permits selective engagement of the second fixed displacement pump 618. As shown, the inter-pump clutching device 613 comprises a clutch and a pair of gears; however, it is understood the inter-pump clutching device 613 may solely comprise a clutch. The clutch may be a dry or wet disk style clutch, a dog clutch, or any other type of clutch. The controller 642 in communication with the clutch is used to selectively engage the first drive shaft 614 with the second fixed displacement pump 618. The pair of gears may be used to modify a characteristic of a power transferred from the first drive shaft 614 to the second fixed displacement pump 618.

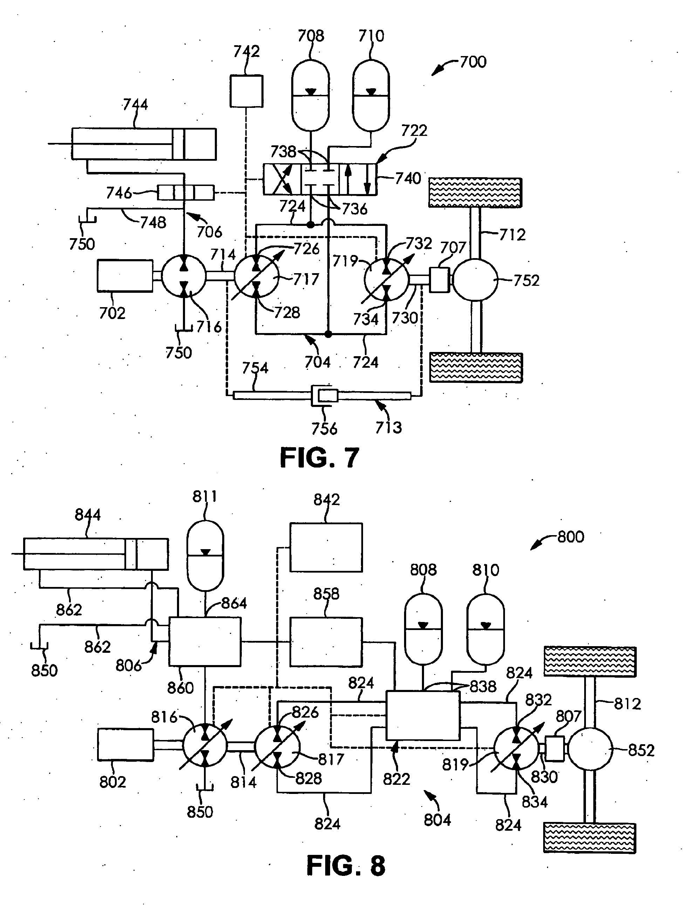

FIG. 7 shows a portion of an alternative embodiment of the hydrostatic driveline 100. A hydrostatic driveline 700 shown in FIG. 7 includes a power source 702, a drive circuit 704, an auxiliary circuit 706, a transmission 707, a first fluid accumulator 708, a second fluid accumulator 710, a drive axle 712, and a direct drive mechanism 713. Similar structural features of the hydrostatic driveline 100 are similarly referenced, with the exception of the below identified features.

The drive circuit comprises a variable displacement pump 717, a. variable displacement motor 719, a directional valve 722, and a plurality of drive fluid conduits 724. The variable displacement pump 717 and the variable displacement motor 719 cooperate to pump a variable amount of hydraulic fluid within a predetermined range through the drive circuit 704.

The direct drive mechanism 713 comprises a plurality of members that permit selective and direct drive engagement between a first drive shaft 714 and the drive axle 712. The direct drive mechanism 713 comprises a plurality of gears, at least one drive member 754, and at least one clutching device 756. The plurality of gears may be used to modify a characteristic of a power transferred from the first drive shaft 714 to the drive axle 712. As shown, the clutching device 756 is illustrated schematically; however, it is understood the clutching device may be a dry or wet disk style clutch, a dog clutch, or any other type of clutch. A controller 742 in communication with the clutching device 756 is used to selectively engage the first drive shaft 714 with the drive axle 712. Further, it is understood other embodiments of the direct drive mechanism 713 may be collinear with the first drive shaft 714 and a second drive shaft 730; such embodiments of the direct drive mechanism 713 comprising a clutch disposed between the first drive shaft714 and the second drive shaft 730.

FIG. 8 shows a portion of an alternative embodiment of the hydrostatic driveline 100. A hydrostatic driveline 800 shown in FIG. 8 includes a power source 802, a drive circuit 804, an auxiliary circuit 806, a transmission 807, a first fluid accumulator 808, a second fluid accumulator 810, a third fluid accumulator 811, and a drive axle 812. The hydrostatic driveline shown in FIG. 8 may also include a direct drive mechanism (not shown) similar to the direct drive mechanism shown in FIG. 7. Similar structural features of the hydrostatic driveline 100 are similarly referenced, with the exception of the below identified features.

The drive circuit 804 comprises a first variable displacement pump 816, a second variable displacement pump 817, a variable displacement motor 819, a directional valve 822, and a plurality of drive fluid conduits 824. The variable displacement pump 817 and the variable displacement motor 819 cooperate to drive the drive axle 812 with a variable amount of hydraulic fluid.

The auxiliary circuit 806 comprises the variable displacement pump 816, a hydraulic transformer 858, an auxiliary directional valve 860, and a plurality of auxiliary fluid conduits 862. The variable displacement pump 816 and the hydraulic transformer 858 cooperate to drive an actuator 844 with a variable amount of hydraulic fluid.

The actuator 844 is a hydraulic cylinder; however, it is understood that the actuator may be a plurality of hydraulic cylinders, a hydraulic motor, or any other device powered by pressurized fluid. The actuator 844 is in fluid communication with the auxiliary directional valve 860. Typically, the actuator 844 engages a movable portion of the vehicle to facilitate the movement of a load. However, it is understood that the actuator 844 may be used in other ways.

The hydraulic transformer 858 is a fluid power device that permits energy to be transferred from the drive circuit 804 at a first pressure to the auxiliary circuit 806 at a second pressure, the first pressure different from the second pressure. Further, it is understood that the hydraulic transformer 858 may also permit energy to be transferred from the auxiliary circuit 806 to the drive circuit 804. The hydraulic transformer 858 is in fluid communication with the drive circuit 804, the auxiliary circuit 806, and at least one fluid reservoir 850.

The third fluid accumulator 811 is an accumulator as is known in the art. The third fluid accumulator 811 is a hollow vessel in fluid communication with an accumulator port 864 of the auxiliary directional valve 860. A quantity of gas within the third fluid accumulator 811 is compressed when hydraulic fluid enters the third fluid accumulator 811. The third fluid accumulator 811 may be configured for operation within a particular pressure range. While not shown, the third fluid accumulator 811 may also be fitted with a flush valve (for draining the third fluid accumulator 811 to the fluid reservoir 850), a pressure relief valve (for draining the third fluid accumulator 811 to the fluid reservoir 850), a proportional valve (for cooperating with the auxiliary directional valve 860 for fluidly connecting the third fluid accumulator 811 to the auxiliary circuit 806), and a pilot valve (for providing fluid pressure to the auxiliary directional valve 860). A controller 842 in communication with the flush valve, the proportional valve, and the pilot valve is used to change a position of the flush valve, the proportional valve, and the pilot valve.

In use, the hydrostatic driveline 100, 200, 300, 400, 500, 600, 700, 800 offers many advantages over hydrostatic drivelines known in the art. The hydrostatic driveline 100, 200, 300, 400, 500, 600, 700, 800 according to the present invention incorporated into a vehicle increases efficiency of the vehicle, reduces a noise of the vehicle, enables a discontinuous release of stored energy, and affords precision control of the actuator 144, 244, 344, 444, 544, 644, 744, 844 and the drive axle 112, 212, 312,412,512,612,712,812.

The hydrostatic driveline 100, 200, 300, 400, 500, 600, 700, 800 increases efficiency of the vehicle in several ways. The hydrostatic driveline 100, 200, 300, 400, 500, 600, 700, 800 permits the power source 102, 202, 302, 402, 502, 602, 702, 802 having a reduced output to be used in the vehicle, facilitates energy recuperation during vehicle braking, facilitates recuperation of potential energy during release of the actuator 144, 244, 344, 444, 544, 644, 744, 844, facilitates the release of stored energy.to supplement the power source 102, 202, 302, 402, 502, 602, 702, 802 and permits stored energy to power secondary energy consuming devices of the vehicle.

The hydrostatic driveline 100, 200, 300, 400, 500, 600, 700, 800 permits a power source 102, 202, 302, 402, 502, 602, 702, 802 having a reduced output to be used in the vehicle by supplementing the capacity of the power source 102, 202, 302, 402, 502, 602, 702, 802 with energy stored in the accumulators 108, 110, 208, 210, 308, 310, 408, 410, 508, 510, 608, 610, 708, 710, 808, 810, 811 to meet a peak power demand of the vehicle. The peak power demand of the vehicle is typically limited to brief amounts of time, for example, during acceleration and load lifting of the vehicle. When supplementing the capacity of a power source is not an option, for instance, in the case of a traditional driveline including an internal combustion engine, the power source must be sized to accommodate the peak power demand of the vehicle. Typically, the power source sized for the traditional driveline exceeds an average power demand of the vehicle on the power source. By directing hydraulic fluid displaced by at least one of the fixed displacement pump 116, 216, 219, 316, 416, 418, 516, 518, 616, 618, 716 and the variable displacement pump 118, 218, 318, 417, 517, 617, 717, 816, 817 into at least one of the accumulators 108, 110, 208, 210, 308, 310, 408, 410, 508, 510, 608, 610, 708, 710, 808, 810, 811 when an instantaneous power demand of the vehicle is less than the average power demand of the vehicle (storing energy), such energy can later be released when the instantaneous power demand of the vehicle exceeds the average power demand of the vehicle. Such a direction of hydraulic fluid is determined by the controller 142, 242, 342, 442, 542, 642, 742, 842 in communication with at least one of the directional valve 122, 222, 322, 422, 522, 622, 722, 822, the auxiliary directional valve 860, the fixed displacement pump 116, 216, 219, 316, 319, 416, 418, 420, 516, 518, 616, 618, 716, the variable displacement pump 118, 120, 218, 220, 318, 320, 417, 419, 517, 519, 520, 617, 619, 717, 719, 816, 817, 819, and the hydraulic transformer 858. Accordingly, the power source 102, 202, 302, 402, 502, 602, 702, 802 having a reduced output to be incorporated into the vehicle without a reduction of the peak power demand available to the vehicle.

The hydrostatic driveline 100, 200, 300, 400, 500, 600, 700, 800 facilitates energy recuperation during vehicle braking by storing a kinetic energy of the vehicle and a kinetic energy of a load the vehicle may be carrying by directing hydraulic fluid displaced by at least one of the fixed displacement motor 319, 420 and the variable displacement motor 120, 220, 320, 419, 519, 520, 619, 719, 819 into at least one of the accumulators 108, 110, 208, 210, 308, 310, 408, 410, 508, 510, 608, 610, 708, 710, 808, 810. Further, such kinetic energy may be transferred into the auxiliary circuit 806 and stored in the third accumulator 811. Such a direction of hydraulic fluid and/or transfer of kinetic energy is determined by the controller 142, 242, 342,442, 542, 642, 742, 842 in communication with at least one of the directional valve 122, 222, 322, 422, 522, 622, 722, 822, the auxiliary directional valve 860, the fixed displacement motor, the variable displacement motor 120, 220, 320, 419, 519, 520, 619, 719, 819, the fixed displacement pump 116, 216, 219, 316, 416, 418, 516, 518, 616, 618, 716, the variable displacement pump 118, 218, 318, 417, 517, 617, 717, 816, 817, and the hydraulic transformer 858.

The hydrostatic driveline 100, 200,300,400, 500, 600, 700, 800 facilitates recuperation of potential energy during release of the actuator 144, 244, 344, 444, 544, 644, 744, 844 by directing hydraulic fluid displaced by a decrease of the potential energy into at least one of the accumulators 108, 110, 208, 210, 308, 310, 408, 410, 508, 510, 608, 610, 708, 710, 808, 810, 811. During vehicle operation, energy may be stored by the actuator 144, 244, 344, 444, 544, 644, 744, 844 or a plurality of actuators. As non-limiting examples, energy may be stored in a boom pivotally coupled to the vehicle, an extensible portion of the vehicle, and a load lifted by the vehicle. Such a direction of hydraulic fluid is determined by the controller 142, 242, 342, 442, 542, 642, 742, 842 in communication with at least one of the auxiliary directional valve 146, 246, 346, 446, 546, 646, 746, 846, the fixed displacement pump 116, 216, 219, 316, 416, 418, 516, 518, 616, 618, 716, the variable displacement pump 118, 218, 318, 417, 517, 617, 717, 816, 817, the fixed displacement motor 319, 420, the variable displacement motor 120, 220, 320, 419, 519, 520, 619, 719, 819, and the hydraulic transformer 858.

The hydrostatic driveline 100, 200, 300, 400, 500, 600, 700, 800 facilitates the release of stored energy to supplement the power source 102, 202, 302, 402, 502, 602, 702, 802 by directing hydraulic fluid stored in at least one of the accumulators 108, 110, 208, 210, 308, 310, 408, 410, 508, 510, 608, 610, 708, 710, 808, 810, 811 into at least one of the drive circuit 104, 204, 304, 404, 504, 604, 704, 804 and the auxiliary circuit 106, 206, 306, 406, 506, 606, 706,806. The hydraulic fluid stored in at least one of the accumulators 108, 110, 208, 210, 308, 310, 408, 410, 508, 510, 608, 610, 708, 710, 808, 810, 811 is released when the instantaneous power demand of the vehicle exceeds the average power demand of the vehicle. Such a release of hydraulic fluid is determined by the controller 142, 242, 342, 442, 542, 642, 742, 842 in communication with at least one of the directional valve 146, 246, 346, 446, 546, 646, 746, 846, the auxiliary directional valve 146, 246, 346, 446, 546, 646, 746, 846, the fixed displacement pump 116, 216, 219, 316, 416, 418, 516, 518, 616, 618, 716, the variable displacement pump 118, 218, 318, 417, 517, 617, 717, 816, 817, the fixed displacement motor 319, 420, the variable displacement motor 120, 220, 320, 419, 519, 520, 619, 719, 819, and the hydraulic transformer 858. Further, it is understood that such a release of hydraulic fluid may be controlled by an operator of the vehicle as desired by the operator of vehicle.

The hydrostatic driveline 100, 200, 300, 400, 500, 600, 700, 800 permits stored energy to power secondary energy consuming devices of the vehicle by directing hydraulic fluid stored in the accumulators 108, 110, 208, 210, 308, 310, 408, 410, 508, 510, 608, 610, 708, 710, 808, 810, 811 into at least one of the drive circuit 104, 204, 304, 404, 504, 604, 704, 804 and the auxiliary circuit 106, 206, 306, 406, 506, 606, 706, 806. As non-limiting examples, the secondary energy consuming devices may be a light, an air conditioner, a radio, a vehicle starter, or any other consuming device that requires an amount of energy small in proportion to a capacity of the hydrostatic driveline 100, 200, 300, 400, 500, 600, 700, 800. A generator (not shown) drivingly engaged with one of the fixed displacement pump 116, 216, 219, 316, 416, 418, 516, 518, 616, 618, 716, the variable displacement pump 118, 218, 318, 417, 517, 617, 717, 816, 817, the fixed displacement motor 319,420, the variable displacement motor 120, 220, 320, 419, 519, 520, 619, 719, 819, the hydraulic transformer 858, the first drive shaft 114, 214, 314, 414, 514, 614, 714, 814, the second drive shaft 130, 230, 330, 430, 530, 630, 730, 830, and the direct drive mechanism 513, 713 is in communication with an electrical circuit (not shown) to power the secondary energy consuming devices. When the secondary energy consuming device is the vehicle starter, it is understood that the vehicle starter may include the accumulators 108, 110, 208, 210, 308, 310, 408, 410, 508, 510, 608, 610, 708, 710, 808, 810, 811 and one of the fixed displacement pump 116, 216, 219, 316, 416, 418, 516, 518, 616, 618, 716 and the variable displacement pump 118, 218, 318, 417, 517, 617, 717, 816, 817, wherein one of the fixed displacement pump 116, 216, 219, 316, 416, 418, 516, 518, 616, 618, 716 and the variable displacement pump 118, 218, 318, 417, 517, 617, 717, 816, 817 drivingly engages the power source 102, 202, 302, 402, 502, 602, 702, 802 to start the power source 102, 202, 302, 402, 502, 602, 702, 802. Such a release of hydraulic fluid is determined by the controller 142, 242, 342, 442, 542, 642, 742, 842 in communication with at least one of the directional valve 146, 246, 346, 446, 546, 646, 746, 846, the auxiliary directional valve 146, 246, 346, 446, 546, 646, 746, 846, the fixed displacement pump 116, 216, 219, 316, 416, 418, 516, 518, 616, 618, 716, the variable displacement pump 118, 218, 318, 417, 517, 617, 717, 816, 817, the fixed displacement motor 319, 420, the variable displacement motor 120, 220, 320, 419, 519, 520, 619, 719, 819, and the hydraulic transformer 858.

The hydrostatic driveline 100, 200, 300, 400, 500, 600, 700, 800 reduces a noise of the vehicle. The power source 102,202, 302, 402, 502, 602, 702, 802 sized for the traditional driveline operates at a fluctuating speed to match an instantaneous power demand of the vehicle. By incorporating a power source 102, 202, 302, 402, 502, 602, 702, 802 of smaller capacity into the vehicle and storing energy in at least one of the accumulators 108, 110, 208, 210, 308, 310, 408, 410, 508, 510, 608, 610, 708, 710, 808, 810, 811 for release when the instantaneous power demand of the vehicle exceeds the average power demand of the vehicle, the power source 102, 202, 302, 402, 502, 602, 702, 802 can operate at a near constant speed that generates an amount of power equal to about the average power demand of the vehicle. The power source 102, 202, 302, 402, 502, 602, 702, 802 operating at the hear constant speed that generates the amount of power equal to about the average power demand of the vehicle does not generate as much noise as the power source 102, 202, 302, 402, 502, 602, 702, 802 sized for the traditional driveline operating at a fluctuating speed. Further, it is understood that the operator of the vehicle may direct the release of hydraulic fluid from the accumulators 108, 110, 208, 210, 308, 310, 408, 410, 508, 510, 608, 610, 708, 710, 808, 810, 811 to supplement the power source 102, 202, 302, 402, 502, 602, 702, 802, permitting the power source 102, 202, 302, 402, 502, 602, 702, 802 to operate at a near constant speed when the power demand of the vehicle exceeds the average power demand of the vehicle. Also, it is understood that the hydrostatic driveline 100, 200, 300, 400, 500, 600, 700, 800 may also be used with the power source 102, 202, 302, 402, 502, 602, 702, 802 sized for the traditional driveline, and the release of hydraulic fluid from the accumulators 108, 110, 208, 210, 308, 310, 408, 410, 508, 510, 608, 610, 708, 710, 808, 810, 811 to supplement the power source 102, 202, 302, 402, 502, 602, 702, 802 enables the power source 102, 202, 302, 402, 502, 602, 702, 802 to not generate as much noise as the power source 102, 202, 302, 402, 502, 602, 702, 802 used with the traditional driveline.

The hydrostatic driveline 100, 200, 300, 400, 500, 600, 700, 800 enables a discontinuous release of stored energy by directing hydraulic fluid stored in the accumulators 108, 110, 208, 210, 308, 310, 408, 410, 508, 510, 608, 610, 708, 710, 808, 810, 811 into the drive circuit 104, 204, 304, 404, 504, 604, 704, 804 or the auxiliary circuit 106, 206, 306, 406, 506, 606, 706, 806. The discontinuous release of stored energy into the drive circuit 104, 204, 304, 404, 504, 604, 704, 804 or the auxiliary circuit 106, 206, 306, 406, 506, 606, 706, 806 is controlled by the operator of the vehicle and may be known as "hammer" mode. "Hammer" mode enables the vehicle to perform a plurality of successive brief accelerations in a relatively short amount of time. Such successive brief accelerations may be directed to the drive axle 112, 212, 312, 412, 512, 612, 712, 812 or to the actuator 144, 244, 344, 444, 544, 644, 744, 844. Further, "hammer" mode as contemplated by the hydrostatic driveline 100, 200, 300, 400, 500, 600, 700, 800 may be performed as a series of controlled low frequency waves to militate against driver discomfort that may result from a discontinuous release of stored energy. As a non-limiting example, "hammer" mode is particularly useful when the vehicle includes an articulated bucket, enabling the articulated bucket to collect a greater amount of an aggregate material by increasing a distance over which the vehicle is decelerated upon making contact with the aggregate material. As further non-limiting examples, "hammer" mode may also be used to dislodge jammed objects, compact materials such as dirt or stone, or compacting frozen precipitates. Such a release of hydraulic fluid is directed by the operator of the vehicle and determined by the controller in communication with at least one of the directional valve 146, 246, 346, 446, 546, 646, 746, 846, the auxiliary directional valve 146, 246, 346, 446, 546, 646, 746, 846, the fixed displacement pump 116, 216, 219, 316, 416, 418, 516, 518, 616, 618, 716, the variable displacement pump 118, 218, 318, 417, 517, 617, 717, 816, 817, the fixed displacement motor 319, 420, the variable displacement motor 120, 220, 320, 419, 519, 520, 619, 719, 819, and the hydraulic transformer 858.

The hydrostatic driveline 100, 200, 300, 400, 500, 600, 700, 800 affords precision control of the actuator 144, 244, 344, 444, 544, 644, 744, 844. The hydrostatic driveline 100, 200, 300, 400, 500, 600, 700, 800 militates against stiction and hysteresis of the actuator 144, 244, 344, 444, 544, 644, 744, 844.

The hydrostatic driveline 100, 200, 300, 400, 500, 600, 700, 800 enables a discontinuous release of stored energy from the accumulators 108, 110, 208, 210, 308, 310, 408, 410, 508, 510, 608, 610, 708, 710, 808, 810, 811 into the auxiliary circuit 106, 206, 306, 406, 506, 606, 706, 806 to militate against stiction and hysteresis of the actuator 144, 244, 344, 444, 544, 644, 744, 844. The discontinuous release of stored energy into the auxiliary circuit 106, 206, 306, 406, 506, 606, 706, 806 is controlled automatically and may be known as "dither" mode. "Dither" mode release small amounts of hydraulic fluid from the accumulators 108, 110, 208, 210, 308, 310, 408, 410, 508, 510, 608, 610, 708, 710, 808, 810, 811 to the auxiliary circuit 106, 206, 306, 406, 506, 606, 706, 806 to minimally fluctuate a position of the actuators 144, 244, 344, 444, 544, 644, 744, 844 to militate against stiction and hysteresis. Such a release of hydraulic fluid is determined by the controller 142, 242, 342, 442, 542, 642, 742, 842 in communication with at least one of the directional valve 146, 246, 346, 446, 546, 646, 746, 846, the auxiliary directional valve 146, 246, 346, 446, 546, 646, 746, 846, the fixed displacement pump 116, 216, 219, 316, 416, 418, 516, 518, 616, 618, 716, the variable displacement pump 118, 218, 318, 417, 517, 617, 717, 816, 817, the fixed displacement motor 319, 420, the variable displacement motor 120, 220, 320, 419, 519, 520, 619, 719, 819, and the hydraulic transformer 858. By militating against stiction and hysteresis of the actuator 144, 244, 344, 444, 544, 644, 744, 844, precision control of the actuator 144, 244, 344, 444, 544, 644, 744, 844 is provided to the hydrostatic driveline 100, 200, 300, 400, 500, 600, 700, 800.

The controller 142, 242, 342, 442, 542, 642, 742, 842 of the hydrostatic driveline 100, 200, 300, 400, 500, 600, 700, 800 performs and controls many tasks that result in an increase of the efficiency of the vehicle the hydrostatic driveline 100, 200, 300, 400, 500, 600, 700, 800 is incorporated in. The controller 142, 242, 342, 442, 542, 642, 742, 842 is configured according to a method for optimizing the parameters of the hydrostatic driveline 100, 200, 300, 400, 500, 600, 700, 800, a method for determining an optimal state of charge control law for the accumulators 108, 110, 208, 210, 308, 310, 408, 410, 508, 510, 608, 610, 708, 710, 808, 810, 811, and a method for tracking an optimal state of charge of the accumulators 108, 110, 208, 210, 308, 310, 408, 410, 508, 510, 608, 610, 708, 710, 808, 810, 811.

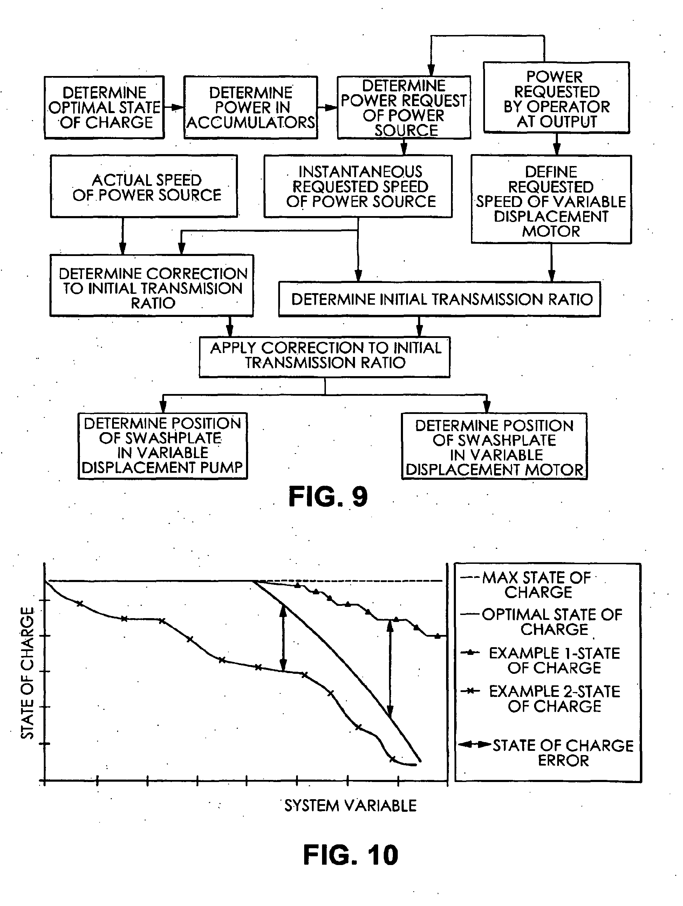

To optimize the parameters of the hydrostatic driveline 100, 200, 300, 400, 500, 600, 700, 800, a specific fuel consumption of the vehicle must be minimized with respect to an amount of power provided by the power source 102, 202, 302, 402, 502, 602, 702, 802. The amount of power provided by the power source 102, 202, 302, 402, 502, 602, 702, 802 to the hydrostatic driveline 100, 200, 300, 400, 500, 600, 700, 800 is determined based on an a power request at the output by the operator of the vehicle. FIG. 9 illustrates the process of determining the amount of power provided by the power source 102, 202, 302, 402, 502, 602, 702, 802. The power request at the output is based on a position of a throttle of the vehicle as desired by the operator, and includes power directed to the drive axle 112, 212, 312, 412, 512, 612, 712, 812 and power directed to the auxiliary circuit 106, 206, 306, 406, 506, 606, 706, 806.

A power request of the power source 102, 202, 302, 402, 502, 602, 702, 802 is determined by reducing the power request at the output by the amount of power the accumulators 108, 110, 208, 210, 308, 310, 408, 410, 508, 510, 608, 610, 708, 710, 808, 810, 811 are capable of supplying. As shown in FIG. 9, the optimal state of charge is determined, which is used to determine the amount of power the accumulators 108, 110, 208, 210, 308, 310, 408, 410, 508, 510, 608, 610, 708, 710, 808, 810, 811 are capable of supplying. The optimal state of charge is determined based on the speed of the vehicle and the amount of energy which may be stored in one of the boom pivotally coupled to the vehicle, the extensible portion of the vehicle, and the load lifted by the vehicle. The amount of power the accumulators 108, 110, 208, 210, 308, 310, 408, 410, 508, 510, 608, 610, 708, 710, 808, 810, 811 are capable of supplying is determined using at least the state of charge of the accumulators 108, 110, 208, 210, 308, 310, 408, 410, 508, 510, 608, 610, 708, 710, 808, 810, 811. Further, it is understood that the amount of power the accumulators 108, 110, 208, 210, 308, 310, 408, 410, 508, 510, 608, 610, 708, 710, 808, 810, 811 are capable of supplying may also be determined using the state of charge and a lookup table or calculated by the controller 142, 242, 342, 442, 542, 642, 742, 842 using a function.

The power request of the power source 102, 202, 302, 402, 502, 602, 702, 802 is met by adjusting an operating speed of the power source 102, 202, 302, 402, 502, 602, 702, 802, taking into account the efficiencies of the variable displacement pump 118, 318, 717, 817 (or the combination of the fixed displacement pump 219, 418, 518, 618 and the variable displacement pump 218, 417, 517, 617) and the variable displacement motor 120, 220, 519, 520, 619, 719, 819 (or the combination of the fixed displacement motor 319, 420 and the variable displacement motor 320, 419).

The specific fuel consumption of a vehicle having the hydrostatic driveline 100, 200, 300, 400, 500, 600, 700, 800 with the variable displacement pump 118, 318, 717, 817 (or the combination of the fixed displacement pump 219, 418, 518, 618 and the variable displacement pump 218, 417, 517, 617) and the variable displacement motor 120, 220, 519, 520, 619, 719, 819 (or the combination of the fixed displacement motor 319, 420 and the variable displacement motor 320, 419) is equal to an amount of fuel consumed per a power output of the vehicle. Further, the power output of the vehicle is equal to a power output of the power source 102, 202, 302, 402, 502, 602, 702, 802 of the vehicle multiplied by an efficiency of the variable displacement motor 120, 220, 519, 520, 619, 719, 819 (or the combination of the fixed displacement motor 319, 420 and the variable displacement motor 320, 419) and an efficiency of the variable displacement pump 118, 318, 717, 817 (or the combination of the fixed displacement pump 219, 418, 518, 618 and the variable displacement pump 218, 417, 517, 617) used in the drive circuit 104, 204, 304, 404, 505, 604, 704, 804 and the auxiliary circuit 106, 206, 306, 406, 506, 606, 706, 806. It is also understood that other efficiencies of the hydrostatic driveline 100, 200, 300, 400, 500, 600, 700, 800 such as mechanical losses and hydraulic losses are considered in determining the power output of the vehicle. The mechanical and volumetric efficiency of the variable displacement motor 120, 220, 320, 419, 519, 520, 619, 719, 819 is a function of at least a speed, a displacement, and an operating pressure of the variable displacement motor 120, 220, 320, 419, 519, 520, 619, 719, 819. The mechanical and volumetric efficiency of the variable displacement pump 118, 218, 318, 417, 517, 617, 717, 816, 817 is a function of at least a speed, a displacement, and an operating pressure of the variable displacement pump 118, 218, 318, 417, 517, 617, 717, 816, 817.

Once the amount of power to be requested to be provided by the power source 102, 202, 302, 402, 502, 602, 702, 802 is determined, a position of a swashplate in the variable displacement pump 118, 218, 318, 417, 517, 617, 717, 816, 817 and the variable displacement motor 120, 220, 320, 419, 519, 520, 619, 719, 819 is determined. FIG. 9 illustrates the process of determining the position of a swashplate in the variable displacement pump 118, 218, 318, 417, 517, 617, 717, 816, 817 and the variable displacement motor 120, 220, 320, 419, 519, 520, 619, 719, 819.

By comparing an instantaneous requested speed of the power source 102, 202, 302, 402, 502, 602, 702, 802 to an instantaneous requested speed of the variable displacement motor 120, 220, 519, 520, 619, 719, 819 (or the combination of the fixed displacement motor 319, 420 and the variable displacement motor 320, 419), an initial transmission ratio is determined. Moreover, by comparing a requested speed of the power source 102, 202, 302, 402, 502, 602, 702, 802 (based on a prior adjustment or the average power demand) to an actual speed of the power source 102, 202, 302, 402, 502, 602, 702, 802 a correction to the initial transmission ratio is calculated. The controller 142, 242, 342, 442, 542, 642, 742, 842 determines whether the initial transmission ratio should be increased or decreased based on an amount of error between the instantaneous requested speed of the power source 102, 202, 302, 402, 502, 602, 702, 802 and the actual speed of the power source 102, 202, 302, 402, 502, 602, 702, 802. By comparing the initial transmission ratio to the desired transmission ratio, the controller 142, 242, 342, 442, 542, 642, 742, 842 determines whether the initial transmission ratio should be increased or decreased.

Next, by comparing an instantaneous speed of the power source 102, 202, 302, 402, 502, 602, 702, 802 to the requested speed of the power source 102, 202, 302, 402, 502, 602, 702, 802, the controller determines whether the speed of the power source 102, 202, 302, 402, 502, 602, 702, 802 should be increased or decreased.

Finally, the controller determines the position of the swashplate in the variable displacement pump 118, 218, 318, 417, 517, 617, 717, 816, 817 and the variable displacement motor 120, 220, 320, 419, 519, 520, 619, 719, 819. The position of the swashplate in the variable displacement pump 118, 218, 318, 417, 517, 617, 717, 816, 817 and the variable displacement motor 120, 220, 320, 419, 519, 520, 619, 719, 819 is dependent on whether the initial transmission ratio should be increased or decreased and whether speed of the power source 102, 202, 302, 402, 502, 602, 702, 802 should be increased or decreased.

To determine the optimal state of charge control law for the hydrostatic driveline 100, 200, 300, 400, 500, 600, 700, 800, the controller 142, 242, 342, 442, 542, 642, 742, 842 compares a plurality of inputs based on vehicle observation and driver behavior to a plurality of conditions for optimized operation of the hydrostatic driveline 100, 200, 300, 400, 500, 600, 700, 800.

The plurality of conditions for optimized operation of the hydrostatic driveline 100, 200, 300, 400, 500, 600, 700, 800 include the condition that the accumulators 108, 110, 208, 210, 308, 310, 408, 410, 508, 510, 608, 610, 708, 710, 808, 810, 811 should be filled whenever the vehicle comes to a stop, the condition that potential energy lost during release of the actuators 144, 244, 344, 444, 544, 644, 744, 844 should be recuperated by directing hydraulic fluid displaced by a decrease of the potential energy into at least one of the accumulators 108, 110, 208, 210, 308, 310, 408, 410, 508, 510, 608, 610, 708, 710, 808, 810, 811, and the condition that as much energy as possible should be stored in the accumulators 108, 110, 208, 210, 308, 310, 408, 410, 508, 510, 608, 610, 708, 710, 808, 810, 811 during a braking process of the vehicle. It is understood the plurality of conditions for optimized operation of the hydrostatic driveline 100, 200, 300, 400, 500, 600, 700, 800 may include other conditions.

The plurality of inputs based on vehicle observation is used to determine the optimal state of charge control law. The plurality of inputs includes a speed of the vehicle, a rate of fluid depletion from the accumulators 108, 110, 208, 210, 308, 310, 408, 410, 508, 510, 608, 610, 708, 710, 808, 810, 811, a load height, a torque demand of the vehicle, and a power demand of the vehicle. It is understood the plurality of inputs based on vehicle observation may include other parameters.

The plurality of inputs based on driver behavior is used to determine the optimal state of charge control law. The plurality of inputs includes a position of the throttle of the vehicle, a position of a brake of the vehicle, a frequency of acceleration of the vehicle, a frequency of braking of the vehicle, an intensity of acceleration of the vehicle, and an intensity of braking of the vehicle. It is understood the plurality of inputs based on driver behavior may include other parameters.

To track the optimal state of charge of the accumulators 108, 110, 208, 210, 308, 310, 408, 410, 508, 510, 608, 610, 708, 710, 808, 810, 811 function, the controller 142, 242, 342, 442, 542, 642, 742, 842 compares an instantaneous state of charge of the accumulators 108, 110, 208, 210, 308, 310, 408, 410, 508, 510, 608, 610, 708, 710, 808, 810, 811 with the optimal state of charge of the accumulators 108, 110, 208, 210, 308, 310, 408, 410, 508, 510, 608, 610, 708, 710, 808, 810, 811, as determined by the optimal state of charge control law for the hydrostatic driveline 100, 200, 300, 400, 500, 600, 700, 800. By comparing the instantaneous state of charge of the accumulators 108, 110, 208, 210, 308, 310, 408, 410, 508, 510, 608, 610, 708, 710, 808, 810, 811 with the optimal state of charge of the accumulators 108, 110, 208, 210, 308, 310, 408, 410, 508, 510, 608, 610, 708, 710, 808, 810, 811, a state of charge error is calculated. As a non-limiting example, FIG. 10 graphically illustrates the state of charge error. A vertical axis is representative of a level of the state of charge of the accumulators 108, 110, 208, 210, 308, 310, 408, 410, 508, 510, 608, 610, 708, 710, 808, 810, 811. A horizontal axis is representative of a system variable of the hydrostatic driveline 100, 200, 300, 400, 500, 600, 700, 800. As a non-limiting example, the system variable may be a speed of the vehicle or a height of a load lifted by the vehicle. If the calculated state of charge error is positive (the accumulators 108, 110, 208, 210, 308, 310, 408, 410, 508, 510, 608, 610, 708, 710, 808, 810, 811 have a state of charge lower than the optimal state of charge), the accumulators 108, 110, 208, 210, 308, 310, 408, 410, 508, 510, 608, 610, 708, 710, 808, 810, 811 are charged by diverting a portion of the hydraulic fluid displaced by the variable displacement pump 118, 318, 717, 817 (or the combination of the fixed displacement pump 219, 418, 518, 618 and the variable displacement pump 218, 417, 517, 617) to the accumulators 108, 110, 208, 210, 308, 310, 408, 410, 508, 510, 608, 610, 708, 710, 608, 810, 811. If the calculated state of charge error is negative (the accumulators 108, 110, 208, 210, 308, 310, 408, 410, 508, 510, 608, 610, 708, 710, 808, 810, 811 have a state of charge higher than the optimal state of charge), the accumulators 108, 110, 208, 210, 308, 310, 408, 410, 508, 510, 608, 610, 708, 710, 808, 810, 811 are released to supplement variable displacement pump 118, 318, 717, 817 (or the combination of the fixed displacement pump 219, 418, 518, 618 and the variable displacement pump 218, 417, 517, 617) in feeding the variable displacement motor 120, 220, 519, 520, 619, 719, 819 (or the combination of the fixed displacement motor 319, 420 and the variable displacement motor 320, 419).

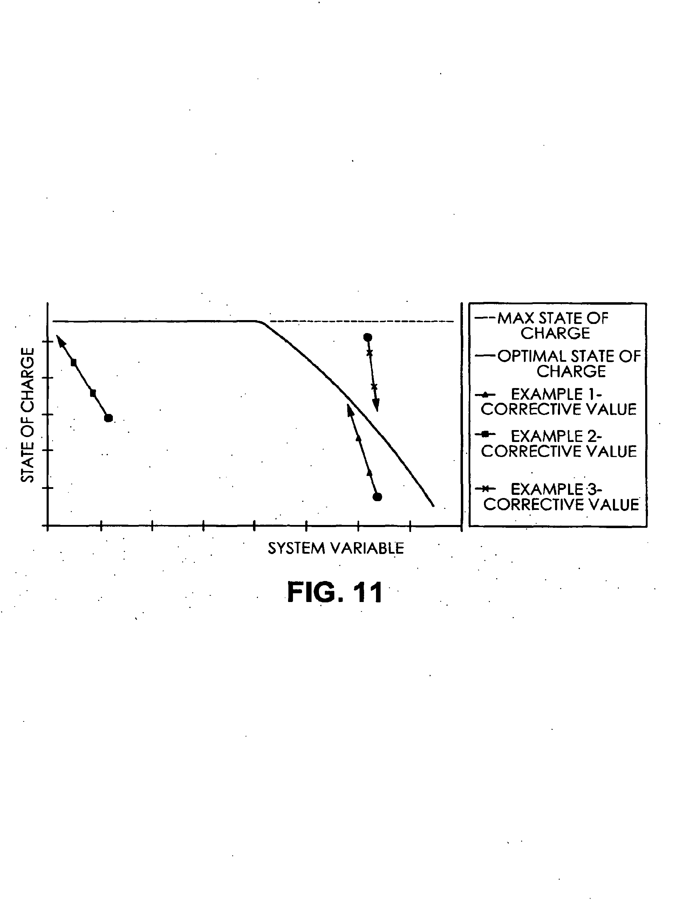

Upon determination of the state of charge error, the controller 142, 242, 342, 442, 542, 642, 742, 842 utilizes a control method including a "fuzzy" logic to return the state of charge of the accumulators 108, 110, 208, 210, 308, 310, 408, 410, 508, 510, 608, 610, 708, 710, 808, 810, 811 to the optimal state of charge of the accumulators 108, 110, 208, 210, 308, 310, 408, 410, 508, 510, 608, 610, 708, 710, 808, 810, 811 as determined by the optimal state of charge control law for the hydrostatic driveline 100, 200, 300, 400, 500, 600, 700, 800. By evaluating the state of charge error in view of a plurality of system variables such as a speed of the vehicle, a torque demand of the vehicle, a height and an amount of a load carried by the vehicle, and whether the state of charge error is positive or negative, a corrective value is assigned to a response action that needs to be taken. It is understood that the plurality of system variables may further include other system variables and that a plurality of variables may be used in a mapping function to determine the corrective value. The response action may be to charge the accumulators 108, 110, 208, 210, 308, 310, 408, 410, 508, 510, 608, 610, 708, 710, 808, 810, 811 or to release the accumulators 108, 110, 208, 210, 308, 310, 408, 410, 508, 510, 608, 610, 708, 710, 808, 810, 811. The corrective value indicates a level of importance of the response action. As a non-limiting example, FIG. 11 graphically illustrates three examples of the corrective values. A vertical axis is representative of a level of the state of charge of the accumulators 108, 110, 208, 210, 308, 310, 408, 410, 508, 510, 608, 610, 708, 710, 808, 810, 811. A horizontal axis is representative of a system variable of the hydrostatic driveline 100, 200, 300, 400, 500, 600, 700, 800. As a non-limiting example, the system variable may be a speed of the vehicle or a height of a load lifted by the vehicle. As non-limiting examples, FIG. 11 illustrates if the system variable is high and the state of charge of the accumulators 108, 110, 208, 210, 308, 310, 408, 410, 508, 510, 608, 610, 708, 710, 808, 810, 811 is about 30% of the optimal state of charge of the accumulators 108, 110, 208, 210, 308, 310, 408, 410, 508, 510, 608, 610, 708, 710, 808, 810, 811, then the controller 142, 242, 342, 442, 542, 642, 742, 842 applies a corrective value of 0.3 (Example 1, a low priority to raise the state of charge of the accumulators 108, 110, 208, 210, 308, 310, 408, 410, 508, 510, 608, 610, 708, 710, 808, 810, 811), if the system variable is low and the state of charge of the accumulators 108, 110, 208, 210, 308, 310, 408, 410, 508, 510, 608, 610, 708, 710, 808, 810, 811 is about 50% of the optimal state of charge of the accumulators 108, 110, 208, 210, 308, 310, 408, 410, 508, 510, 608, 610, 708, 710, 808, 810, 811, then the controller 142, 242, 342, 442, 542, 642, 742, 842 applies a corrective value of 0.7 (Example 2, a high priority to raise the state of charge of the accumulators 108, 110, 208, 210, 308, 310, 408, 410, 508, 510, 608, 610, 708, 710, 808, 810, 811), and if the system variable is high and the state of charge of the accumulators 108, 110, 208, 210, 308, 310, 408, 410, 508, 510, 608, 610, 708, 710, 808, 810, 811 is about 190% of the optimal state of charge of the accumulators 108, 110, 208, 210, 308, 310, 408, 410, 508, 510, 608, 610, 708, 710, 808, 810, 811, then the controller 142, 242, 342, 442, 542, 642, 742, 842 applies a corrective value of 0.7 (Example 3, a high priority to lower the state of charge of the accumulators 108, 110, 208, 210, 308, 310, 408, 410, 508, 510, 608, 610, 708, 710, 808, 810,811).

In accordance with the provisions of the patent statutes, the present invention has been described in what is considered to represent its preferred embodiments. However, it should be noted that the invention can be practiced otherwise than as specifically illustrated and described without departing from the scope of the claims.

## Claims

1. A hydrostatic driveline (800) for a vehicle, comprising:
a power source (802);
a drive axle (812);
a first fluid accumulator (808);
a second fluid accumulator (810);
an auxiliary circuit (806) including a first pump (816), the first pump (816) drivingly engaged with the power source (802); and
a drive circuit (804) including a second pump (817) drivingly engaged with the power source (802), a motor (819) drivingly engaged with the drive axle (812), and a directional valve (822), the second pump (817) in fluid communication with the directional valve (822), the directional valve (822) in fluid communication with the first fluid accumulator (808) and the second fluid accumulator (810), wherein the directional valve (822) may be selectively controlled to direct fluid from the second pump (817) and the motor (819) to the first fluid accumulator (808) and the second fluid accumulator (810),
wherein the auxiliary circuit (806) further includes an auxiliary directional valve (860) and at least one actuator (844), the auxiliary directional valve (860) in fluid communication with the first pump (816),
**characterized by**
further comprising a hydraulic transformer (858), the hydraulic transformer (858) in fluid communication with the directional valve (822) and the auxiliary directional valve (860), the hydraulic transformer (858) permitting energy to be transferred from one of the drive circuit (804) at a first pressure to the auxiliary circuit (806) at a second pressure, the first pressure different from the second pressure.

2. The hydrostatic driveline according to claim 1, wherein the first pump (816) is a fixed displacement pump, the second pump (817) is a variable displacement pump, and the motor (819) is a variable displacement motor.

3. The hydrostatic driveline according to claim 2, further comprising a controller (842) in communication with the directional valve (822), the second pump (817), and the motor (819).

4. The hydrostatic driveline according to claim 1, further comprising a direct drive mechanism (713) for selectively engaging the power source with the drive axle through at least one drive member (754).

5. The hydrostatic driveline according to claim 4, wherein the direct drive mechanism (713) includes a clutch (756) for selectively engaging the power source with the drive axle.

6. The hydrostatic driveline according to claim 1, wherein the drive circuit further comprises a third pump, the third pump (219) drivingly engaged the power source (802).

7. The hydrostatic driveline according to claim 6, wherein the third pump is a fixed displacement pump (219) in fluid communication with the directional valve (822) or a pump (618) selectively engaged by an inter-pump clutching device (613).

8. The hydrostatic driveline according to claim 1, wherein the drive circuit (804) further comprises a second motor (320, 420), the second motor drivingly engaged with the drive axle (812) and being
a fixed displacement motor (420) in fluid communication with the directional valve (422) or
a variable displacement motor (320) in fluid communication with the directional valve (322).

9. A method for minimizing a fuel consumption rate of a vehicle having a hydrostatic driveline (800), the method comprising the steps of:
providing a variable displacement motor (819);
determining an efficiency of the variable displacement motor (819);
providing a variable displacement pump (817);
determining an efficiency of the variable displacement pump;
providing a power source, a capacity of the power source based on a desired power output of the vehicle, an efficiency of the variable displacement motor, and an efficiency of the variable displacement pump;
providing a controller (842); and
controlling a fluid displacement and an output pressure of the motor independent of a fluid displacement of the pump with the controller, wherein the controller employs the efficiency of the motor and the efficiency of the pump to minimize the fuel consumption rate of the vehicle.

10. The method according to claim 9, wherein the efficiency of the variable displacement pump is determined based on at least one of an operating speed range of the motor, a fluid displacement range of the motor, and an operating pressure range of the motor.

11. The method according to claim 9, wherein the efficiency of the variable displacement pump is determined based on at least one of an operating speed range of the pump, a fluid displacement range of the pump, and an operating pressure range of the pump.

12. The method according to claim 9, wherein the step of controlling a fluid displacement and an output pressure of the motor is performed by the controller adjusting a position of a swashplate of the motor.

13. A method for determining an optimal state of charge control function for a hydrostatic accumulator (808, 810) and employing a control system to adjust a state of charge of the hydrostatic accumulator to track the optimal state of charge function, comprising the steps of:
providing a hydrostatic driveline (800) for a vehicle including a power source (802), a pump (817) drivingly engaged with the power source, a motor (819), and the hydrostatic accumulator, and the pump, the motor, and the hydrostatic accumulator forming a portion of a fluidic circuit (804);
providing a controller (842) in communication with a plurality of inputs;
calculating the optimal state of charge control function with the controller;
calculating an optimal state of charge of the hydrostatic accumulator using the optimal state of charge function and at least a portion of the plurality of inputs;
comparing the state of charge of the hydrostatic accumulator to the optimal state of charge as calculated using the optimal state of charge control function to determine a state of charge error;
calculating a corrective value for the state of charge using the state of charge error, and the at least a portion of the plurality of inputs; and
adjusting a state of charge of the hydrostatic accumulator based on the corrective value and the state of charge error, the state of charge of the hydrostatic accumulator adjusted by charging the hydrostatic accumulator using one of the pump and the motor or discharging the hydrostatic accumulator.

14. The method according to claim 13, wherein the step of calculating the optimal state of charge control function with the controller is based on a first portion of the inputs, a second portion of the inputs, a preference for the hydrostatic accumulator being fully charged when the vehicle is stopped, and a preference for filling the hydrostatic accumulator during a braking of the vehicle.

15. The method according to claim 14, wherein the first portion of the plurality of inputs includes at least one of monitoring a speed of the vehicle, a rate of fluid transfer to or from the hydrostatic accumulator, a state of charge of the hydrostatic accumulator, and a power demand of the vehicle and the second portion of the plurality of inputs includes at least a frequency and an intensity of activation of a braking system and an acceleration system of the vehicle.

## Patentansprüche

1. Hydrostatischer Antriebsstrang (800) für ein Fahrzeug, welcher aufweist:
eine Energiequelle (802);
eine Antriebsachse (812);
einen ersten Fluidakkumulator (808);
einen zweiten Fluidakkumulator (810);
einen Hilfskreis (806), enthaltend eine erste Pumpe (816), wobei die erste Pumpe (816) in antriebsmäßigem Eingriff mit der Energiequelle (802) ist; und
einen Antriebskreis (804), enthaltend eine zweite Pumpe (817), die in antriebsmäßigem Eingriff mit der Energiequelle (802) ist, einen Motor (819), der in antriebsmäßigem Eingriff mit der Antriebsachse (812) ist, und ein Richtungsventil (822), wobei die zweite Pumpe (817) in Fluidverbindung mit dem Richtungsventil (822) ist, das Richtungsventil (822) in Fluidverbindung mit dem ersten Fluidakkumulator (808) und dem zweiten Fluidakkumulator (810) ist, wobei das Richtungsventil (822) selektiv gesteuert werden kann, um Fluid von der zweiten Pumpe (817) und dem Motor (819) zu dem ersten Fluidakkumulator (808) und dem zweiten Fluidakkumulator (810) zu leiten,
wobei der Hilfskreis (806) weiterhin ein Hilfsrichtungsventil (860) und zumindest einen Aktuator (844) enthält, welches Hilfsrichtungsventil (860) in Fluidverbindung mit der ersten Pumpe (816) ist,
**dadurch gekennzeichnet, dass**
weiterhin ein hydraulischer Wandler (858) vorgesehen ist, wobei der hydraulische Wandler (858) in Fluidverbindung mit dem Richtungsventil (822) und dem Hilfsrichtungsventil (860) ist und der hydraulische Wandler (858) ermöglicht, dass Energie von einem von dem Antriebskreis (804) bei einem ersten Druck zu dem Hilfskreis (806) bei einem zweiten Druck übertragen wird, wobei der erste Druck verschieden von dem zweiten Druck ist.

2. Hydrostatischer Antriebsstrang nach Anspruch 1, bei dem die erste Pumpe (816) eine Pumpe für feste Verdrängung ist, die zweite Pumpe (817) eine Pumpe variable Verdrängung ist und der Motor (819) ein Motor für variable Verdrängung ist.

3. Hydrostatischer Antriebsstrang nach Anspruch 2, weiterhin aufweisend eine Steuervorrichtung (842) in Verbindung mit dem Richtungsventil (822), der zweiten Pumpe (817) und dem Motor (819).

4. Hydrostatischer Antriebsstrang nach Anspruch 1, weiterhin aufweisend einen Direktantriebsmechanismus (713) für den selektiven Eingriff der Energiequelle mit der Antriebsachse durch zumindest ein Antriebsteil (754).

5. Hydrostatischer Antriebsstrang nach Anspruch 4, bei dem der Direktantriebsmechanismus (713) eine Kupplung (756) für den selektiven Eingriff der Energiequelle mit der Antriebsachse enthält.

6. Hydrostatischer Antriebsstrang nach Anspruch 1, bei dem der Antriebskreis weiterhin eine dritte Pumpe aufweist, wobei die dritte Pumpe (219) in antriebsmäßigem Eingriff mit der Energiequelle (802) ist.

7. Hydrostatischer Antriebsstrang nach Anspruch 6, bei dem die dritte Pumpe eine Pumpe (219) für feste Verdrängung in Fluidverbindung mit dem Richtungsventil (822) oder eine Pumpe (618), die durch eine Interpumpen-Kupplungsvorrichtung (613) in selektivem Eingriff ist, ist.

8. Hydrostatischer Antriebsstrang nach Anspruch 1, bei dem der Antriebskreis (804) weiterhin einen zweiten Motor (320, 420) aufweist, wobei der zweite Motor in antriebsmäßigem Eingriff mit der Antriebsachse (812) ist und
ein Motor (420) für feste Verdrängung in Fluidverbindung mit dem Richtungsventil (422) oder
ein Motor (320) für variable Verdrängung in Fluidverbindung mit dem Richtungsventil (322) ist.

9. Verfahren zum Minimieren einer Kraftstoff-Verbrauchsrate eines Fahrzeugs mit einem hydrostatischen Antriebsstrang (800), welches Verfahren die Schritte aufweist:
Vorsehen eines Motors (819) für variable Verdrängung;
Bestimmen einer Effizienz des Motors (819) für variable Verdrängung;
Vorsehen einer Pumpe (817) für variable Verdrängung;
Bestimmen einer Effizienz der Pumpe für variable Verdrängung;
Vorsehen einer Energiequelle, wobei eine Kapazität der Energiequelle auf einer gewünschten Energieabgabe des Fahrzeugs, einer Effizienz des Motors für variable Verdrängung und einer Effizienz der Pumpe für variable Verdrängung basiert;
Vorsehen einer Steuervorrichtung (842); und
Steuern einer Fluidverdrängung und eines Ausgangsdrucks des Motors unabhängig von einer Fluidverdrängung der Pumpe mit der Steuervorrichtung, wobei die Steuervorrichtung die Effizienz des Motors und die Effizienz der Pumpe verwendet, um die Kraftstoff-Verbrauchsrate des Fahrzeugs zu minimieren.

10. Verfahren nach Anspruch 9, bei dem die Effizienz der Pumpe für variable Verdrängung bestimmt wird auf der Grundlage von zumindest einem von einem Betriebsgeschwindigkeitsbereich des Motors, einem Fluidverdrängungsbereich des Motors und einem Betriebsdruckbereich des Motors.

11. Verfahren nach Anspruch 9, bei dem die Effizienz der Pumpe für variable Verdrängung bestimmt wird auf der Grundlage von zumindest einem von einem Betriebsgeschwindigkeitsbereich der Pumpe, einem Fluidverdrängungsbereich der Pumpe und einem Betriebsdruckbereich der Pumpe.

12. Verfahren nach Anspruch 9, bei dem der Schritt des Steuerns einer Fluidverdrängung und eines Ausgangsdrucks des Motors durch die Steuervorrichtung, die eine Position einer Taumelscheibe des Motors einstellt, durchgeführt wird.

13. Verfahren zum Bestimmen eines optimalen Zustands der Ladesteuerfunktion für einen hydrostatischen Akkumulator (808, 810) und zum Verwenden eines Steuersystems zum Einstellen eines Ladungszustands des hydrostatischen Akkumulators, um den optimalen Zustand der Ladefunktion zu verfolgen, welches die Schritte aufweist:
Vorsehen eines hydrostatischen Antriebsstrangs (808) für ein Fahrzeug, das eine Energiequelle (802), eine Pumpe (817), die in antriebsmäßigem Eingriff mit der Energiequelle ist, einen Motor (819) und den hydrostatischen Akkumulator enthält, wobei die Pumpe, der Motor und der hydrostatische Akkumulator einen Teil eines Fluidkreises (804) bilden;
Vorsehen einer Steuervorrichtung (842) in Verbindung mit mehreren Eingaben;
Berechnen des optimalen Zustands der Ladesteuerfunktion mit der Steuervorrichtung;
Berechnen eines optimalen Zustands der Ladung des hydrostatischen Akkumulators unter Verwendung des optimalen Zustands der Ladefunktion und zumindest eines Teils der mehreren Eingaben;
Vergleichen des Zustands der Ladung des hydrostatischen Akkumulators mit dem optimalen Zustand der Ladung, der unter Verwendung des optimalen Zustands der Ladesteuerfunktion berechnet wurde, um einen Zustand eines Ladungsfehlers zu bestimmen;
Berechnen eines Korrekturwerts für den Zustand der Ladung unter Verwendung des Zustands des Ladungsfehlers und des zumindest eines Teils der mehreren Eingaben; und
Einstellen eines Zustands der Ladung des hydrostatischen Akkumulators auf der Grundlage des Korrekturwerts und des Zustands des Ladungsfehlers, wobei der Zustand der Ladung des hydrostatischen Akkumulators eingestellt wird durch Laden des hydrostatischen Akkumulators unter Verwendung von einer/einem von der Pumpe und dem Motor, oder durch Entladen des hydrostatischen Akkumulators.

14. Verfahren nach Anspruch 13, bei dem der Schritt des Berechnens des optimalen Zustands der Ladesteuerfunktion mit der Steuervorrichtung auf einem ersten Teil der Eingaben, einem zweiten Teil der Eingaben, einer Präferenz für die vollständige Ladung des hydrostatischen Akkumulators, wenn das Fahrzeug angehalten ist, und einer Präferenz für das Füllen des hydrostatischen Akkumulators während eines Bremsens des Fahrzeugs basiert.

15. Verfahren nach Anspruch 14, bei dem der erste Teil der mehreren Eingaben zumindest eine/einen von dem Überwachen einer Geschwindigkeit des Fahrzeugs, einer Rate der Fluidübertragung zu oder von dem hydrostatischen Akkumulator, einem Zustand der Ladung des hydrostatischen Akkumulators und einer Energienachfrage des Fahrzeugs enthält und der zweite Teil der mehreren Eingaben zumindest eine Frequenz und eine Intensität der Aktivierung eines Bremssystems und eines Beschleunigungssystems des Fahrzeugs enthält.

## Revendications

1. Chaîne cinématique hydrostatique (800) pour un véhicule, comprenant :
une source de puissance (802) ;
un essieu d'entraînement (812) ;
un premier accumulateur de fluide (808) ;
un second accumulateur de fluide (810) ;
un circuit auxiliaire (806) incluant une première pompe (816), la première pompe (816) étant en engagement d'entraînement avec la source de puissance (802) ; et
un circuit d'entraînement (804) incluant une seconde pompe (817) en engagement d'entraînement avec la source de puissance (802), un moteur (819) en engagement d'entraînement avec l'essieu d'entraînement (812), et une vanne directionnelle (822), la seconde pompe (817) en communication de fluide avec la vanne directionnelle (822), la vanne directionnelle (822) en communication de fluide avec le premier accumulateur de fluide (808) et le second accumulateur de fluide (810), dans laquelle la vanne directionnelle (822) peut être commandée de façon sélective pour diriger un fluide en provenance de la seconde pompe (817) et du moteur (819) sur le premier accumulateur de fluide (808) et le second accumulateur de fluide (810),
dans laquelle le circuit auxiliaire (806) inclut en outre une vanne directionnelle auxiliaire (860) et au moins un actionneur (844), la vanne directionnelle auxiliaire (860) étant en communication de fluide avec la première pompe (816),
**caractérisée en ce qu'**elle comprend en outre :
un transformateur hydraulique (858), le transformateur hydraulique (858) étant en communication de fluide avec la vanne directionnelle (822) et la vanne directionnelle auxiliaire (860), le transformateur hydraulique (858) permettant le transfert d'énergie depuis le circuit d'entraînement (804) à une première pression jusqu'au circuit auxiliaire (806) à une seconde pression, la première pression étant différente de la seconde pression.

2. Chaîne cinématique hydrostatique selon la revendication 1, dans laquelle la première pompe (816) est une pompe à déplacement fixe, la seconde pompe (817) est une pompe à déplacement variable, et le moteur (819) est un moteur à déplacement variable.

3. Chaîne cinématique hydrostatique selon la revendication 2, comprenant en outre un contrôleur (842) en communication avec la vanne directionnelle (822), la seconde pompe (817) et le moteur (819).

4. Chaîne cinématique hydrostatique selon la revendication 1, comprenant en outre un mécanisme d'entraînement direct (713) pour engager de façon sélective la source de puissance avec l'essieu d'entraînement par l'intermédiaire d'au moins un élément d'entraînement (754).

5. Chaîne cinématique hydrostatique selon la revendication 4, dans laquelle le mécanisme d'entraînement direct (713) inclut un embrayage (756) pour engager de façon sélective la source de puissance avec l'essieu d'entraînement.

6. Chaîne cinématique hydrostatique selon la revendication 1, dans laquelle le circuit d'entraînement comprend en outre une troisième pompe, la troisième pompe (219) étant en engagement d'entraînement avec la source de puissance (802).

7. Chaîne cinématique hydrostatique selon la revendication 6, dans laquelle la troisième pompe est une pompe à déplacement fixe (219) en communication de fluide avec la vanne directionnelle (822) ou une pompe (618) engagée de façon sélective par un dispositif d'embrayage inter-pompe (613).

8. Chaîne cinématique hydrostatique selon la revendication 1, dans laquelle le circuit d'entraînement (804) comprend en outre un second moteur (320, 420), le second moteur étant en engagement d'entraînement avec l'essieu d'entraînement (812) et étant un moteur à déplacement fixe (420) en communication de fluide avec la vanne directionnelle (422) ou un moteur à déplacement variable (320) en communication de fluide avec la vanne directionnelle (322).

9. Procédé pour minimiser un niveau de consommation de carburant d'un véhicule comportant une chaîne cinématique hydrostatique (800), le procédé comprenant les étapes de :
fourniture d'un moteur à déplacement variable (819) ;
détermination d'un rendement du moteur à déplacement variable (819) ;
fourniture d'une pompe à déplacement variable (817) ;
détermination d'un rendement de la pompe à déplacement variable ;
fourniture d'une source de puissance, une capacité de la source de puissance étant basée sur une sortie de puissance souhaitée du véhicule, un rendement du moteur à déplacement variable et un rendement de la pompe à déplacement variable ;
fourniture d'un contrôleur (842) ; et
commande d'un déplacement de fluide et d'une pression de sortie du moteur indépendamment d'un déplacement de fluide de la pompe à l'aide du contrôleur, dans lequel le contrôleur utilise le rendement du moteur et le rendement de la pompe afin de minimiser le niveau de consommation de carburant du véhicule.

10. Procédé selon la revendication 9, dans lequel le rendement de la pompe à déplacement variable est déterminé sur la base d'au moins une plage prise parmi une plage de vitesses de fonctionnement du moteur, une plage de déplacements de fluide du moteur et une plage de pressions de fonctionnement du moteur.

11. Procédé selon la revendication 9, dans lequel le rendement de la pompe à déplacement variable est déterminé sur la base d'au moins une plage prise parmi une plage de vitesses de fonctionnement de la pompe, une plage de déplacements de fluide de la pompe et une plage de pressions de fonctionnement de la pompe.

12. Procédé selon la revendication 9, dans lequel l'étape de commande d'un déplacement de fluide et d'une pression de sortie du moteur est réalisée par le contrôleur qui règle une position d'un plateau cyclique du moteur.

13. Procédé pour déterminer un état optimal d'une fonction de commande de charge pour un accumulateur hydrostatique (808, 810) et pour utiliser un système de commande pour régler un état de charge de l'accumulateur hydrostatique afin de suivre l'état optimal de la fonction de charge, comprenant les étapes de :
installation d'une chaîne cinématique hydrostatique (800) sur un véhicule incluant une source de puissance (802), une pompe (817) en engagement d'entraînement avec la source de puissance, un moteur (819) et l'accumulateur hydrostatique, et la pompe, le moteur et l'accumulateur hydrostatique formant une partie d'un circuit de fluide (804) ;
fourniture d'un contrôleur (842) en communication avec une pluralité d'entrées ;
calcul de l'état optimal d'une fonction de commande de charge à l'aide du contrôleur ;
calcul d'un état optimal de charge de l'accumulateur hydrostatique en utilisant l'état optimal de fonction de charge et au moins une partie de la pluralité d'entrées ;
comparaison de l'état de charge de l'accumulateur hydrostatique avec l'état optimal de charge tel que calculé en utilisant l'état optimal de fonction de commande de charge afin de déterminer un état d'erreur de charge ;
calcul d'une valeur de correction pour l'état de charge en utilisant l'état d'erreur de charge et au moins une partie de la pluralité d'entrées ; et
réglage d'un état de charge de l'accumulateur hydrostatique sur la base de la valeur de correction et de l'état d'erreur de charge, l'état de charge de l'accumulateur hydrostatique étant réglé en chargeant l'accumulateur hydrostatique en utilisant soit la pompe, soit le moteur ou en déchargeant l'accumulateur hydrostatique.

14. Procédé selon la revendication 13, dans lequel l'étape de calcul de l'état optimal de fonction de commande de charge à l'aide du contrôleur est basée sur une première partie des entrées, une seconde partie des entrées, une préférence consistant en ce que l'accumulateur hydrostatique est complètement chargé lorsque le véhicule est arrêté et une préférence consistant en ce que le remplissage de l'accumulateur hydrostatique est réalisé pendant un freinage du véhicule.

15. Procédé selon la revendication 14, dans lequel la première partie de la pluralité d'entrées inclut au moins une entrée prise parmi la surveillance d'une vitesse du véhicule, un niveau de transfert de fluide sur ou depuis l'accumulateur hydrostatique, un état de charge de l'accumulateur hydrostatique et une demande de puissance du véhicule et la seconde partie de la pluralité d'entrées inclut au moins une fréquence et une intensité d'activation d'un système de freinage et d'un système d'accélération du véhicule.
